(19) Europäisches Patentamt
European Patent Office
Office européen des brevets

(11) **EP 4 640 728 A1**

(12) **EUROPEAN PATENT APPLICATION**

(43) Date of publication:
**29.10.2025 Bulletin 2025/44**

(21) Application number: **25171630.4**

(22) Date of filing: **22.04.2025**

(51) International Patent Classification (IPC):
***C08G 18/08*** *(2006.01)* ***C08G 18/10*** *(2006.01)*
***C08G 18/24*** *(2006.01)* ***C08G 18/32*** *(2006.01)*
***C08G 18/44*** *(2006.01)* ***C08G 18/73*** *(2006.01)*
***C08G 18/75*** *(2006.01)* ***C08G 18/79*** *(2006.01)*
***C08G 64/02*** *(2006.01)* ***C08G 64/30*** *(2006.01)*
***C08J 5/18*** *(2006.01)* ***C09D 175/06*** *(2006.01)*

(52) Cooperative Patent Classification (CPC):
(C-Sets available)
**C08G 18/44; C08G 18/0852; C08G 18/10; C08G 18/246; C08G 18/324; C08G 18/73; C08G 18/758; C08G 18/792; C08G 64/0208; C08G 64/305; C08J 5/18; C09D 175/06** (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **23.04.2024 JP 2024069705**
**17.04.2025 JP 2025068071**

(71) Applicant: **Asahi Kasei Kabushiki Kaisha**
**Tokyo 1000006 (JP)**

(72) Inventor: **OOTANI, Tetsuya**
**Tokyo, 1000006 (JP)**

(74) Representative: **Strehl & Partner mbB**
**Maximilianstrasse 54**
**80538 München (DE)**

(54) **POLYCARBONATE DIOLS**

(57) To provide a polycarbonate diol or the like which, even if plant-derived, has an appearance excellent in colorless transparency comparable with that of petroleum-derived one. A polycarbonate diol having a repeating unit represented by the following formula (1) and a terminal hydroxyl group, in which an integral value of a signal at 2.50 to 2.70 ppm is 0.01 to 1.0 under the assumption that an integral value of a signal at 3.90 to 4.45 ppm is 1000 in a $^1$H-NMR spectrum measured with chloroform-d as a solvent and tetramethylsilane as a standard substance:

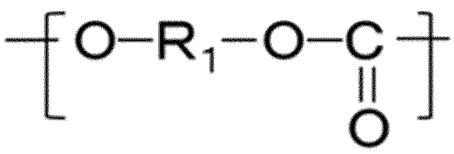

(1)

wherein $R_1$ represents a divalent aliphatic hydrocarbon having 2 to 20 carbon atoms.

EP 4 640 728 A1

(52) Cooperative Patent Classification (CPC): (Cont.)

C-Sets
**C08G 18/10, C08G 18/324;**
**C09D 175/06, C08K 5/103**

## Description

### Technical Field

The present invention relates to a polycarbonate diol using a bio-raw material.

### Background Art

Petroleum-derived polycarbonate diols have been conventionally used as raw materials for polyurethane resins in a wide range of fields of synthetic leather, artificial leather, adhesives, coating materials for household furniture, coating materials for automobiles, and the like, and have excellent functions such as heat resistance, weather resistance, hydrolysis resistance, and oil resistance, as compared with polyethers and polyesters. Bio-derived polycarbonate diols have also been increasingly highly demanded similarly.

For example, plant-derived polycarbonate polyols are increasingly needed from the viewpoint of reduction of environmental load, and there is proposed a plant-derived polycarbonate polyol synthesized with a plant-derived polyol, a plant-derived ester, and carbonate (Patent Literature 1, Patent Literature 2). Furthermore, there is also proposed a bio-polyester polyol synthesized with a plant-derived short-chain diol component having 2 to 4 carbon atoms and a plant-derived carboxylic acid component, or a bio-polyether polyol synthesized with a plant-derived short-chain diol component having 2 to 4 carbon atoms (Patent Literature 3).

### Citation List

### Patent Literature

Patent Literature 1: Japanese Patent Laid-Open No. 2017-14427

Patent Literature 2: Japanese Patent Laid-Open No. 2014-1475

Patent Literature 3: Japanese Patent No. 5826814

### Summary of Invention

### Technical Problem

On the other hand, the polycarbonate polyols described in Patent Literature 1 and Patent Literature 2 include cyclic ester compounds such as valerolactone, caprolactone, and butyrolactone of plant-derived diol raw materials, as impurities of the raw materials, and therefore polyurethane compositions obtained from these raw materials have the problem of being inferior in durability as compared with polyurethane compositions synthesized from petroleum-derived diol raw materials because heat resistance and chemical resistance are weak spots of ester compounds. Furthermore, a problem is also that quality is impaired by coloration observed due to poor weather resistance of ether bonds added to cyclic ether compounds.

A bio-polyurethane resin with, as a raw material, the plant-derived short-chain diol described in Patent Literature 3 is high in carbonate bond density, therefore also high in viscosity and difficult to handle, also high in glass transition temperature and easily solidified, and insufficient in flexibility which is originally possessed in a polycarbonate diol copolymer.

An object of the present invention is to provide a polycarbonate diol which, even if thus plant-derived, has an appearance excellent in colorless transparency comparable with that of petroleum-derived one, and a urethane coating film excellent in flexibility and chemical resistance.

### Solution to Problem

The present inventor has made intensive studies in order to solve the above problems, and as a result, have found that a polycarbonate diol capable of solving the above problems is obtained, thereby leading to completion of the present invention.

Specifically, the present invention includes the following aspects.

[1] A polycarbonate diol having a repeating unit represented by the following formula (1) and a terminal hydroxyl group, wherein
an integral value of a signal at 2.50 to 2.70 ppm is 0.01 to 1.0 under the assumption that an integral value of a signal at 3.90 to 4.45 ppm is 1000 in a $^1$H-NMR spectrum measured with chloroform-d as a solvent and tetramethylsilane as a standard substance:

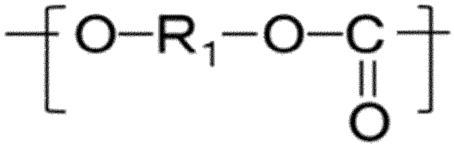 (1)

wherein $R_1$ represents a divalent aliphatic hydrocarbon having 2 to 20 carbon atoms.

[2] The polycarbonate diol according to [1], wherein the repeating unit represented by the formula (1) contains a repeating unit represented by the following formula (2).

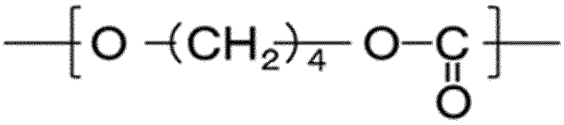 (2)

[3] The polycarbonate diol according to [1] or [2], wherein the repeating unit represented by the formula (1) contains a repeating unit represented by the following formula (3).

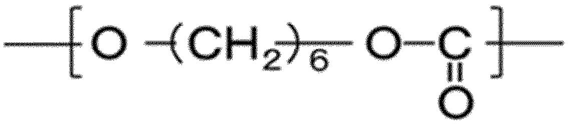 (3)

[4] The polycarbonate diol according to any of [1] to [3], wherein the repeating unit represented by the formula (1) contains a repeating unit represented by the following formula (4).

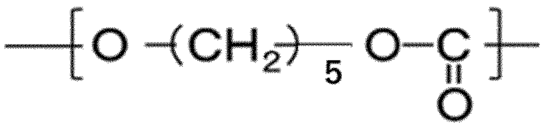 (4)

[5] The polycarbonate diol according to any of [1] to [4], wherein a hydroxyl value measured by a neutralization titration method of JIS K 0070 (1992) is 32 to 280 mg-KOH/g.

[6] The polycarbonate diol according to any of [1] to [5], wherein the repeating unit represented by the formula (1) contains

10 to 95% by mol of a repeating unit represented by the following formula (2), and

5 to 90% by mol of repeating unit(s) represented by the following formula (3) and/or the following formula (4).

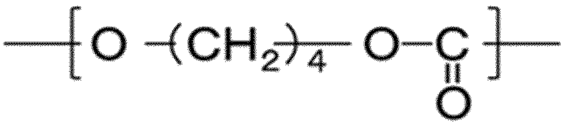 (2)

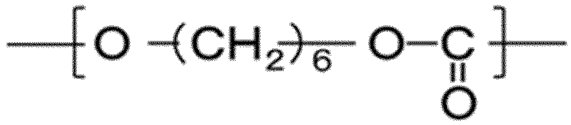
(3)

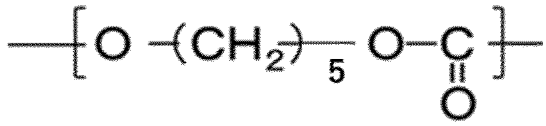
(4)

[7] A polyurethane resin that is a reaction product of

the polycarbonate diol according to any of [1] to [6],

an organic polyisocyanate, and

a chain extender.

[8] A coating composition including a reaction product of

the polycarbonate diol according to any of [1] to [6], and
an organic polyisocyanate.

## Advantageous Effect of Invention

According to the present invention, a polycarbonate diol having an appearance excellent in colorless transparency, and a urethane coating film excellent in flexibility and chemical resistance can be provided.

## Description of Embodiments

Hereinafter, a mode for carrying out the present invention (hereinafter, abbreviated as "the present embodiment".) is described in detail. It is noted that the present invention is not limited to the following embodiment and can be variously modified and carried out within the gist thereof.

<Polycarbonate diol>

A polycarbonate diol of the present embodiment has a repeating unit represented by the following formula (1) ("repeating unit (1)"), and a terminal hydroxyl group:

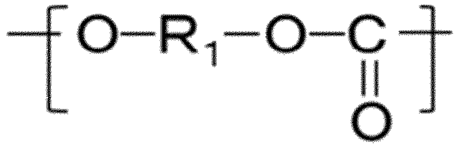
(1)

wherein $R_1$ represents a divalent aliphatic hydrocarbon having 2 to 20 carbon atoms.
The aliphatic hydrocarbon group of $R_1$ may be any of a linear aliphatic hydrocarbon group, a branched aliphatic hydrocarbon group, a cyclic aliphatic hydrocarbon group, or any combination thereof.
The number of carbon atoms in the aliphatic hydrocarbon group of $R_1$ is preferably 2 to 15, more preferably 3 to 10, further preferably 4 to 6.
The repeating unit (1) preferably contains a repeating unit represented by the following formula (2) ("repeating unit (2)"). It is preferable that 10 to 95% by mol of the repeating unit (1) correspond to the repeating unit (2).

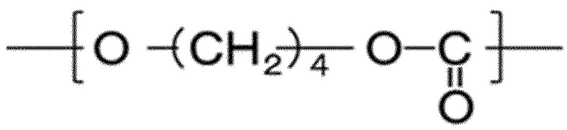
(2)

The repeating unit (1) preferably contains a repeating unit represented by the following formula (3) ("repeating unit (3)"). It is preferable that 5 to 90% by mol of the repeating unit (1) correspond to the repeating unit (3).

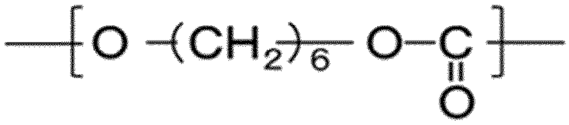 (3)

The repeating unit (1) preferably contains a repeating unit represented by the following formula (4) ("repeating unit (4)"). It is preferable that 5 to 90% by mol of the repeating unit (1) correspond to the repeating unit (4).

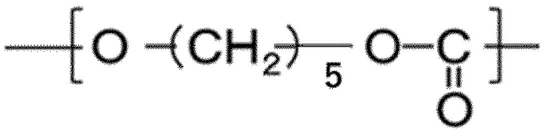 (4)

The repeating unit (1) preferably contains the repeating unit (2) and the repeating unit (3).
The repeating unit (1) preferably contains the repeating unit (2) and the repeating unit (4).
The repeating unit (1) preferably contains the repeating unit (2), the repeating unit (3), and the repeating unit (4).
The repeating unit (1) preferably contains 10 to 95% by mol of the repeating unit (2) and 5 to 90% by mol of the repeating unit (3) and/or the repeating unit (4).
When the repeating unit (1) contains the repeating unit (3) and the repeating unit (4), the above "5 to 90% by mol" is the total amount of the repeating unit (3) and the repeating unit (4).
The total amount of the repeating unit (2) and the repeating unit (3), the total amount of the repeating unit (2) and the repeating unit (4), or the total amount of the repeating unit (2), the repeating unit (3) and the repeating unit (4) is preferably 70% by mol or more, more preferably 80% by mol or more, further preferably 90% by mol or more, particularly preferably 95% by mol or more of the repeating unit (1).
When the repeating unit (2) corresponds to 10 to 95% by mol of the repeating unit (1), chemical resistance tends to be excellent and such a proportion is more preferably 30 to 70% by mol.
When the repeating unit (3) and/or the repeating unit (4) correspond(s) to 5 to 90% by mol of the repeating unit (1), flexibility tends to be excellent and such a proportion is more preferably 30 to 70% by mol.
The diol used as a raw material (preferably plant-derived) of a polycarbonate diol of one embodiment of the present invention can be one, or two or more diols of diols each not having a side chain, such as ethylene glycol, 1,3-propanediol, 1,4-butanediol, 1,5-pentanediol, 1,6-hexanediol, 1,7-heptanediol, 1,8-octanediol, 1,9-nonanediol, 1,10-decanediol, 1,11-undecanediol, 1,12-dodecanediol, and 1,14-tetradecanediol, diols each having a side chain, such as 2-methyl-1, 8-octanediol, 2-ethyl-1,6-hexanediol, 2-methyl-1,3-propanediol, 3-methyl-1,5-pentanediol, 2,4-dimethyl-1,5-pentanediol, 2,4-diethyl-1,5-pentanediol, 2-butyl-2-ethyl-1,3-propanediol, and 2,2-dimethyl-1,3-propanediol, and cyclic diols such as 1,4-cyclohexane dimethanol and 2-bis(4-hydroxycyclohexyl)-propane.
A compound having three or more hydroxyl groups in one molecule, for example, trimethylolethane, trimethylolpropane, hexanetriol, or pentaerythritol can also be used in a small amount. The amount of the compound having three or more hydroxyl groups in one molecule is preferably 0.01 to 5% by weight, more preferably 0.01 to 1% by weight based on the total amount of the diol from the viewpoint of suppression of gel formation during synthesis of the polycarbonate diol.
A particularly preferred polycarbonate diol as a polycarbonate diol of one embodiment of the present invention is a polycarbonate diol with 1,4-butanediol and 1,6-hexanediol as raw materials, specifically a polycarbonate diol in which 10 to 95% by mol of the repeating unit (1) in the polycarbonate polyol corresponds to a 1,4-butanediol-derived repeating unit (2) and 5 to 90% by mol of the repeating unit (1) corresponds to a 1,6-hexanediol-derived repeating unit (3).

<Method for producing polycarbonate diol>

A known method as one example of the production method is a method including admixing a carbonate raw material described below and the above-mentioned diol raw material, reacting them at 100 to 200°C in the presence of a transesterification catalyst under ordinary pressure or reduced pressure, removing the resulting carbonate raw material-derived alcohol to obtain a low-molecular weight polycarbonate diol, and then performing heating at 160 to 250°C under reduced pressure to not only remove unreacted carbonate raw material and diol, but also condense the low-molecular weight polycarbonate diol, to obtain a polycarbonate diol having a predetermined molecular weight.
The reaction temperature for removal of impurities in 1,4-butanediol as a bio-raw material is, for example, 130°C to 200°C, preferably 150 to 180°C, further preferably 130 to 160°C.

The degree of depressurization in this case is, for example, 2.0 to 9.0 kPa, preferably 3.0 to 7.0 kPa, further preferably 3.5 to 5.0 kPa.

Examples of the carbonate raw material used in synthesis of a polycarbonate diol of one embodiment of the present invention include dialkyl carbonates such as dimethyl carbonate, diethyl carbonate, dipropyl carbonate, and dibutyl carbonate, diaryl carbonates such as diphenyl carbonate, and alkylene carbonates such as ethylene carbonate, trimethylene carbonate, 1,2-propylene carbonate, 1,2-butylene carbonate, 1,3-butylene carbonate, and 1,2-pentylene carbonate. Among them, one, or two or more carbonates can be used as a raw material. Dimethyl carbonate, diethyl carbonate, ethylene carbonate, propylene carbonate, diphenyl carbonate, or dibutyl carbonate is further preferably used from the viewpoints of availability and ease of setting of polymerization reaction conditions.

Production of a polycarbonate diol of one embodiment of the present invention is generally carried out by adding a catalyst. Such a catalyst used in one embodiment of the present invention can be freely selected from common transesterification reaction catalysts. For example, a metal such as lithium, sodium, potassium, rubidium, cesium, magnesium, calcium, strontium, barium, zinc, aluminum, titanium, cobalt, germanium, tin, lead, antimony, arsenic or cerium, or any salt, alkoxide or organic compound thereof is used. A titanium, tin, or lead compound is particularly preferred. The amount of such a catalyst used is usually 0.00001 to 0.1% based on the weight of the polycarbonate diol.

When 1,4-butanediol and 1,6-hexanediol or 1,5-pentanediol are used as raw materials in production of the polycarbonate diol used in the present embodiment, the ratio of these raw materials is not particularly limited and the ratio of these raw materials used here is preferably set so that the resulting polycarbonate diol is liquid at room temperature. When two diols are used as raw materials, the amounts thereof loaded are preferably set so that the molar ratio thereof is 30/70 to 70/30. This range tends to allow the resulting polycarbonate diol to be liquid at room temperature. A range of 40/60 to 60/40 is more preferable because it tends to be liquid even at 0°C or less.

<Integral value ratio>

In the polycarbonate diol of the present embodiment, the integral value of a signal at 2.50 to 2.70 ppm (hereinafter, also abbreviated as "integral value ratio") is 0.01 to 1.0 under the assumption that the integral value of a signal at 3.90 to 4.45 ppm is 1000 in a $^1$H-NMR spectrum measured with chloroform-d as a solvent and tetramethylsilane (TMS) as a standard substance. It is presumed with respect to the $^1$H-NMR spectrum that the signal at 3.90 to 4.45 ppm is a signal assigned to methylene bound to carbonate and the signal at 2.50 to 2.70 ppm is a signal assigned to any impurity in a bio-raw material.

Such any impurity is presumed to be, but not limited to, an ether compound having a furan ring, generated as an impurity during production of fumaric acid or a fumaric acid derivative serving as a raw material of butanediol by an oxidation reaction, in which furfural obtained from inedible plant waste such as a corn raw material is adopted as a raw material. Therefore, flexibility unique to ether compounds can be expected to be obtained.

The integral value ratio in the polycarbonate diol of the present embodiment serves as an index representing the amount of presence of a bio-raw material-derived impurity contained in a certain repeating unit. The polycarbonate diol of the present embodiment, when it exhibits an integral value ratio of 0.01 or more, is excellent in flexibility, and the integral value ratio is preferably 0.05 or more, further preferably 0.1 or more. When the integral value ratio is 0.01 or more, the flexibility of a urethane film formed from a conventional polycarbonate diol can also be kept. On the contrary, when the integral value ratio is more than 1.0, a reduction in chemical resistance, or coloration is observed in the polycarbonate diol and the quality is adversely affected, and the integral value ratio is preferably 0.5 or less, further preferably 0.2 or less. Specifically, the integral value ratio is preferably 0.05 to 0.5, more preferably 0.1 to 0.2.

Examples of the method for producing the polycarbonate diol having the integral value ratio of the present embodiment can include a method including admixing the carbonate raw material and the diol raw material, reacting them at 100 to 160°C in the presence of a transesterification catalyst under ordinary pressure or reduced pressure, removing the resulting carbonate raw material-derived alcohol to obtain a low-molecular weight polycarbonate diol, and then performing heating at 140 to 180°C under reduced pressure to not only remove unreacted carbonate raw material and diol, but also condense the low-molecular weight polycarbonate diol, to obtain a polycarbonate diol having a predetermined molecular weight. If the reaction temperature is here too increased, an ether compound having a furan ring is decomposed to cause an ether bond to be easily incorporated into a polycarbonate, and therefore it is necessary to set the reaction temperature to a temperature less than a common reaction temperature.

It is known that polyurethanes using polyether polyols are inferior in chemical resistance as compared with those using polycarbonate diols.

The integral value ratio in the polycarbonate diol can be measured by a method described in Examples below.

<Hydroxyl value>

The hydroxyl value of the polycarbonate diol of the present embodiment, as measured by a neutralization titration

method of JIS K 0070 (1992), is preferably 32 to 280 mg-KOH/g. When the hydroxyl value of the polycarbonate diol of the present embodiment is 280 mg-KOH/g or less, flexibility of the resulting polyurethane is improved. The hydroxyl value of the polycarbonate diol of the present embodiment is preferably 32 mg-KOH/g or more because the solid content concentration or the like of a coating agent is not restricted. The hydroxyl value of the polycarbonate diol of the present embodiment is more preferably 37 to 140 mg-KOH/g, further preferably 37 to 125 mg-KOH/g.

The hydroxyl value of the polycarbonate diol of the present embodiment is preferably 32 mg-KOH/g or more because the molecular weight is decreased and the carbonate bond density is increased and therefore chemical resistance is excellent. The hydroxyl value of the polycarbonate diol of the present embodiment is preferably 280 mg-KOH/g or less because a methylene chain during urethane binding is elongated and therefore the effect of flexibility is exerted. The hydroxyl value of the polycarbonate diol of the present embodiment is particularly preferably 45 to 75 mg-KOH/g.

The hydroxyl value of the polycarbonate diol of the present embodiment can be measured by a method described in Examples below.

<Thermoplastic polyurethane>

The method for producing a thermoplastic polyurethane of the present embodiment is not particularly limited, and a polyurethanization reaction known in the polyurethane field is used. For example, there is used a method including simultaneously mixing and reacting three components of a polyisocyanate compound (preferably organic polyisocyanate) (a), a polycarbonate diol (b), and a chain extender (c), or a method including reacting the polyisocyanate compound (a) and the polycarbonate diol (b) in advance to provide a prepolymer, and then adding the chain extender (c) for chain extension. Here, any other component, for example, a carboxyl group- and/or sulfone group-containing polyol or any salt thereof, or a known polyol may be used in combination as a raw material for synthesizing the polyurethane resin of the present embodiment, in addition to the above (a) to (c) components, as long as the effects of the present invention are not impaired.

<Coating composition>

The coating composition of the present embodiment includes a urethane prepolymer obtained by reacting the above-mentioned polycarbonate diol and an organic polyisocyanate, and the urethane prepolymer preferably has a terminal isocyanate group.

Furthermore, the coating composition of the present embodiment more preferably includes a polyurethane resin obtained by reacting the above-mentioned polycarbonate diol, an organic polyisocyanate and a chain extender, and is further preferably a water-based coating composition including a polyurethane resin obtained by reacting the above-mentioned polycarbonate diol, an organic polyisocyanate and a chain extender.

The organic polyisocyanate used here is not particularly limited, and examples thereof include known aromatic diisocyanates such as 2,4-tolylene diisocyanate, 2,6-tolylene diisocyanate, and any mixture thereof (TDI), crude TDI, diphenylmethane-4,4'-diisocyanate (MDI), crude MDIb**,** naphthalene-1,5-diisocyanate (NDI), 3,3'-dimethyl-4,-biphenylene diisocyanate, polymethylene polyphenyl isocyanate, xylylene diisocyanate (XDI), and phenylene diisocyanate, known aliphatic diisocyanates such as 4,4'-methylenebiscyclohexyl diisocyanate (hydrogenated MDI), hexamethylene diisocyanate (HMDI), and isophorone diisocyanate (IPD, cyclohexane diisocyanate (hydrogenated XDI), as well as isocyanurated modified articles, carbodiimidated modified articles and biuretized modified articles of these isocyanates. These organic polyisocyanates may be used singly or in combinations of two or more kinds thereof.

A known production method in the field is used as the method for producing the coating composition of the present embodiment. For example, there can be produced a two-liquid type solvent-based coating composition in which a coating material main agent obtained from the above-mentioned polycarbonate diol and a curing agent including an organic polyisocyanate is to be mixed immediately before coating; a one-liquid type solvent-based coating composition including a urethane prepolymer having a terminal isocyanate group, obtained by reacting the above-mentioned polycarbonate diol and an organic polyisocyanate; a one-liquid type solvent-based coating composition including a polyurethane resin obtained by reacting the above-mentioned polycarbonate diol, an organic polyisocyanate and a chain extender; or a one-liquid type water-based coating composition.

For example, a curing accelerator (catalyst), a filler, a dispersant, a flame retardant, a dye, an organic or inorganic pigment, a release agent, a fluidity modifier, a plasticizer, an antioxidant, an ultraviolet absorber, a light stabilizer, a defoamer, a leveling agent, a colorant, and/or a solvent can be added to the coating composition of the present embodiment, depending on, for example, various applications.

Examples

Hereinafter, the present embodiment is described in further detail with reference to Examples, but the present

embodiment is not limited by these Examples at all. Test methods in the following Examples were carried out according to the following test methods.

<Methods for evaluating polycarbonate diol>

1) Hydroxyl value (average hydroxyl value number) of polycarbonate diol

The hydroxyl value was measured according to JIS K 0070 (1992).

2) Number average molecular weight (Mn) in terms of hydroxyl value of polycarbonate diol

The hydroxyl value of the polycarbonate diol was measured with an acetylation reagent according to JIS K 0070 (1992), and the molecular weight (Mn) was calculated from the value by the following expression.

$$Mn = 56.1 \times 2 \times 1000/\text{hydroxyl value}$$

3) Compositional ratio (copolymerization ratio) of polycarbonate diol

One g of a polycarbonate diol sample was taken in a 100-ml eggplant flask, and 30 g of ethanol and 4 g of potassium hydroxide were placed thereto to perform a reaction at 100°C for 1 hour. After the reaction liquid was cooled to room temperature, 2 to 3 droplets of phenolphthalein were added thereto as an indicator and neutralization was performed with hydrochloric acid. After the neutralized liquid was cooled in a refrigerator for 1 hour, a salt precipitated was removed by filtration, and the filtrate was analyzed with GC (gas chromatography). GC analysis was performed by gas chromatography GC-2014 (manufactured by Shimadzu Corporation) equipped with, as a column, DB-WAX (manufactured by J&W) and with diethylene glycol diethyl ester as an internal standard and a hydrogen flame ionization detector (FID) as a detector, to perform quantitative determination of the amount of each component. The temperature rise profile of the column was configured from retention at 130°C for 5 minutes and thereafter a temperature rise to 200°C at 10°C/min. The compositional ratio (copolymerization ratio) of the polycarbonate diol was determined from the molar ratio of alcohol components detected, based on the above analysis results.

4) Method for calculating integral value ratio of polycarbonate diol ($^1$H-NMR)

The integral value ratio in the polycarbonate diol was determined as follows.

First, 50 mg of a sample was dissolved in 0.75 mL of chloroform-d (manufactured by FUJIFILM Wako Pure Chemical Corporation). Tetramethylsilane (TMS) was added as a chemical shift standard to the solution, and the resulting solution was subjected to $^1$H-NMR measurement with ECZ500 (SC) manufactured by JEOL Ltd. A $^1$H-NMR spectrum was obtained in the measurement in which the resonant frequency was 500 MHz, the pulse width was 45°, the waiting time was 5 seconds, the cumulated number was 500, and the TMS signal was assumed to be at 0 ppm. The integral value ratio in the polycarbonate diol was determined by the following expression with the integral value of a signal at 3.90 to 4.45 ppm and the integral value of a signal at 2.50 to 2.70 ppm obtained in the $^1$H-NMR measurement.

$$\text{Integral value ratio} = D/C \times 1000$$

C: integral value of signal at 3.90 to 4.45 ppm

D: integral value of signal at 2.50 to 2.70 ppm

5) Coloring index of polycarbonate diol <APHA>

The coloring index was measured according to JIS K1557-5 (2007).

<APHA>

less than 20: ○ almost no coloration observed.

20 or more and less than 50: △ coloration slightly observed.

50 or more: × coloration observed.

6) Low-temperature storage stability of polycarbonate diol

The appearance after the polycarbonate diol was placed in a refrigerating storage cabinet at 0°C for 1 month was evaluated. The determination results were represented by the following designations.

○: transparent liquid form

△: clouded wax form

×: solidified

<Methods for evaluating polyurethane film>

1) Tensile test at room temperature

A polyurethane film produced by the method described in Example 1 was used to obtain a strip-shaped test piece having a width of 10 mm, a length of 100 mm, and a thickness of about 0.5 mm according to JIS K6251 (2017). The test piece obtained was subjected to a tensile test with a tensile tester (manufactured by Orientec Co., Ltd., product name "Tensilon, Model RTE-1210") at a distance between chucks of 20 mm, a tensile speed of 100 mm/min, and a temperature of 23°C (relative humidity 55%), to measure the strength at breakage and the elongation at breakage.

1. Strength at breakage

50 MPa or more: ◎ favorable.

40 MPa or more and less than 50 MPa: ○ generally favorable.

20 MPa or more and less than 40 MPa: △ slightly insufficient.

less than 20 MPa: × insufficient.

2. Elongation at breakage

600% or more: ◎ favorable.

500% or more and less than 600%: O generally favorable.

400% or more and less than 500%: △ slightly insufficient.

less than 400%: × insufficient.

2) Evaluation of moist heat resistance

The polyurethane film produced was used to produce a strip-shaped sample having a width of 10 mm, a length of 100 mm, and a thickness of about 50 μm. Heating was performed in a gear oven at a temperature of 80°C and a humidity of 85% for 1 month. The strength at breakage of the sample after heating was measured in the same manner as in <Tensile test at room temperature> described above, and the retention ratio (%) was determined by the following expression.

Breaking strength retention ratio (%) = Strength at breakage after heating/Strength at breakage before heating × 100

90% or more: ○ favorable

80% or more and less than 90%: △ slightly favorable.

less than 80%: × poor.

3) Evaluation of oleic acid resistance

The polyurethane film produced was used to produce a strip-shaped sample having a width of 10 mm, a length of 50 mm, and a thickness of about 50 μm. First, the mass of a coating film (film) before the test was weighed. The coating film (film) was charged to a glass bottle having a volume of 250 ml, with 50 ml of oleic acid therein as a test solvent, and left to stand in a constant temperature room at 23°C for 2 weeks. After the test, the coating film (film) was taken out, the front and rear surfaces thereof were lightly wiped with a wiper made of paper, and thereafter the mass was measured with a precision balance, to calculate the mass change ratio (swelling ratio) by the following expression.

Swelling ratio (%) = [(Mass after test - Mass before test)/Mass before test] × 100

less than 10%: ◎ no swelling of coating film observed.

10% or more and less than 20%: ○ swelling of coating film slightly observed.

20% or more: △ swelling of coating film observed.

<Methods for evaluating coating film>

1) Chemical resistance

A cotton ball having a diameter of 10 mm, impregnated with each of various solvents (ethanol, methyl ethyl ketone, xylene), was placed for 1 minute on the coating film obtained by production according to the method in Example 9, and the state of the coating film after removal of the solvent remaining on the surface was observed. The determination method was as described below.

○: transparent and not depressed

△: slightly clouded or slightly depressed

×: clouded or depressed

2) Weather resistance test
1. Production of coating film for weather resistance test

After 0.2% by mass of IRGANOX1076 and 0.2% by mass of TINUVIN765 were added to the coating material solution produced in each of Examples and Comparative Examples, these were stirred to produce a coating material solution for a weather resistance test. This coating material solution was applied onto a white acrylonitrile-butadiene-styrene (ABS) resin plate by use of an applicator, and thereafter heated and cured at 80°C for 2 hours to obtain a coating film for a weather resistance test, having a thickness of 40 μm.

2. Weather resistance test method

The resulting coating film for a weather resistance test was subjected to a weather resistance test for 1 month with DPWL-5R manufactured by Suga Test Instruments Co., Ltd. (black panel temperature 60°C, irradiance 30 w/$m^2$, cycle conditions: irradiation at 60°C for 4 hours and wetting at 40°C for 4 hours, ultraviolet fluorescent lamp: SUGA-FS-40).

3. Measurement of color difference

The L values, a values, and b values of the coating film before and after the weather resistance test were measured with SM-P45 manufactured by Suga Test Instruments Co., Ltd., and the color difference was determined by the following ΔE calculation method.

$$\Delta E = \{(L1 - L2)2 + (a1 - a2)2 + (b1 - b2)2\}1/2$$

In the above expression, L1, a1, and b1 respectively represent the L value, the a value, and the b value of the coating film before the weather resistance test, and L2, a2, and b2 respectively represent the L value, the a value, and the b value of the coating film after the weather resistance test.

○: ΔE of 3 or less.

△: ΔE of more than 3 and 5 or less.

×: ΔE of more than 5, or breakage of coating film by weather resistance test.

3) Soft feeling

The coating material solution produced in each of Examples and Comparative Examples was applied at a thickness of 40 μm onto an acrylonitrile-butadiene-styrene (ABS) resin plate, to obtain a coating film plate. The soft feeling was evaluated by the touch in feeling of the surface of the resulting coating film plate with the hand. The determination results were represented by the following designations.

○: favorable soft feeling

△: relatively favorable soft feeling

×: no soft feeling.

[Polymerization Example 1 of polycarbonate diol]

A 1-L glass flask equipped with a rectifier filled with a regular packing material and a stirring apparatus was loaded with 136 g (1.5 mol) of 1,4-butanediol obtained by a bio-manufacturing process, and 361 g (3.1 mol) of 1,6-hexanediol and 403 g (4.6 mol) of ethylene carbonate, commonly used in petroleum-based raw materials.

Thereto was added 0.09 g of titanium tetrabutoxide as a catalyst, and a reaction was performed for 18 hours at a reaction temperature of 140 to 160°C while the pressure was dropped from 5 kPa to 3 kPa and a mixture of ethylene glycol generated and the ethylene carbonate was distilled off. Thereafter, switching to simple distillation was performed, and the reaction was performed at 185°C for 3 hours under a gradual pressure reduction to 0.1 kPa to distill out a monomer, thereby obtaining polycarbonate diol PC1. PC1 had a hydroxyl value of 55.5 and an average molecular weight (Mn) of 2022, and polymerization had no problem.

[Polymerization Example 2 of polycarbonate diol]

A 1-L glass flask equipped with a rectifier filled with a regular packing material and a stirring apparatus was loaded with 217 g (2.4 mol) of 1,4-butanediol obtained by a bio-manufacturing process, and 269 g (2.3 mol) of 1,6-hexanediol and 413 g (4.7 mol) of ethylene carbonate, commonly used in petroleum-based raw materials.

Thereto was added 0.09 g of titanium tetrabutoxide as a catalyst, and a reaction was performed for 18 hours at a reaction temperature of 140 to 160°C while the pressure was dropped from 5 kPa to 3 kPa and a mixture of ethylene glycol generated and the ethylene carbonate was distilled off. Thereafter, switching to simple distillation was performed, and the reaction was performed at 185°C for 3 hours under a gradual pressure reduction to 0.1 kPa to distill out a monomer, thereby obtaining polycarbonate diol PC2. PC2 had a hydroxyl value of 55.8 and an average molecular weight (Mn) of 2010, and polymerization had no problem.

[Polymerization Example 3 of polycarbonate diol]

A 1-L glass flask equipped with a rectifier filled with a regular packing material and a stirring apparatus was loaded with 314 g (3.5 mol) of 1,4-butanediol obtained by a bio-manufacturing process, and 160 g (1.4 mol) of 1,6-hexanediol and 426 g (4.8 mol) of ethylene carbonate, commonly used in petroleum-based raw materials.

Thereto was added 0.09 g of titanium tetrabutoxide as a catalyst, and a reaction was performed for 18 hours at a reaction temperature of 140 to 160°C while the pressure was dropped from 5 kPa to 3 kPa and a mixture of ethylene glycol generated and the ethylene carbonate was distilled off. Thereafter, switching to simple distillation was performed, and the

reaction was performed at 185°C for 3 hours under a gradual pressure reduction to 0.1 kPa to distill out a monomer, thereby obtaining polycarbonate diol PC3. PC3 had a hydroxyl value of 56.0 and an average molecular weight (Mn) of 2005, and polymerization had no problem.

[Polymerization Example 4 of polycarbonate diol]

A 1-L glass flask equipped with a rectifier filled with a regular packing material and a stirring apparatus was loaded with 213 g (2.4 mol) of 1,4-butanediol obtained by a bio-manufacturing process, and 275 g (2.3 mol) of 1,6-hexanediol and 413 g (4.7 mol) of ethylene carbonate, commonly used in petroleum-based raw materials.

Thereto was added 0.09 g of titanium tetrabutoxide as a catalyst, and a reaction was performed for 18 hours at a reaction temperature of 140 to 160°C while the pressure was dropped from 5 kPa to 3 kPa and a mixture of ethylene glycol generated and the ethylene carbonate was distilled off. Thereafter, switching to simple distillation was performed, and the reaction was performed at 185°C for 2 hours under a gradual pressure reduction to 0.1 kPa to distill out a monomer, thereby obtaining polycarbonate diol PC4. PC4 had a hydroxyl value of 110.5 and an average molecular weight (Mn) of 1015, and polymerization had no problem.

[Polymerization Example 5 of polycarbonate diol]

A 1-L glass flask equipped with a rectifier filled with a regular packing material and a stirring apparatus was loaded with 222 g (2.5 mol) of 1,4-butanediol obtained by a bio-manufacturing process, and 264 g (2.2 mol) of 1,6-hexanediol and 414 g (4.7 mol) of ethylene carbonate, commonly used in petroleum-based raw materials.

Thereto was added 0.09 g of titanium tetrabutoxide as a catalyst, and a reaction was performed for 18 hours at a reaction temperature of 140 to 160°C while the pressure was dropped from 5 kPa to 3 kPa and a mixture of ethylene glycol generated and the ethylene carbonate was distilled off. Thereafter, switching to simple distillation was performed, and the reaction was performed at 185°C for 5 hours under a gradual pressure reduction to 0.1 kPa to distill out a monomer, thereby obtaining polycarbonate diol PC5. PC5 had a hydroxyl value of 37.4 and an average molecular weight (Mn) of 3000, and polymerization had no problem.

[Polymerization Example 6 of polycarbonate diol]

A 1-L glass flask equipped with a rectifier filled with a regular packing material and a stirring apparatus was loaded with 132 g (1.5 mol) of 1,4-butanediol obtained by a bio-manufacturing process, and 339 g (3.3 mol) of 1,5-pentanediol and 429 g (4.9 mol) of ethylene carbonate, commonly used in petroleum-based raw materials.

Thereto was added 0.09 g of titanium tetrabutoxide as a catalyst, and a reaction was performed for 18 hours at a reaction temperature of 140 to 160°C while the pressure was dropped from 5 kPa to 3 kPa and a mixture of ethylene glycol generated and the ethylene carbonate was distilled off. Thereafter, switching to simple distillation was performed, and the reaction was performed at 185°C for 3 hours under a gradual pressure reduction to 0.1 kPa to distill out a monomer, thereby obtaining polycarbonate diol PC6. PC6 had a hydroxyl value of 55.5 and an average molecular weight (Mn) of 2040, and polymerization had no problem.

[Polymerization Example 7 of polycarbonate diol]

A 1-L glass flask equipped with a rectifier filled with a regular packing material and a stirring apparatus was loaded with 222 g (2.5 mol) of 1,4-butanediol obtained by a bio-manufacturing process, and 245 g (2.4 mol) of 1,5-pentanediol and 434 g (4.9 mol) of ethylene carbonate, commonly used in petroleum-based raw materials.

Thereto was added 0.09 g of titanium tetrabutoxide as a catalyst, and a reaction was performed for 18 hours at a reaction temperature of 140 to 160°C while the pressure was dropped from 5 kPa to 3 kPa and a mixture of ethylene glycol generated and the ethylene carbonate was distilled off. Thereafter, switching to simple distillation was performed, and the reaction was performed at 185°C for 3 hours under a gradual pressure reduction to 0.1 kPa to distill out a monomer, thereby obtaining polycarbonate diol PC7. PC7 had a hydroxyl value of 55.8 and an average molecular weight (Mn) of 2011, and polymerization had no problem.

[Polymerization Example 8 of polycarbonate diol]

A 1-L glass flask equipped with a rectifier filled with a regular packing material and a stirring apparatus was loaded with 316 g (3.5 mol) of 1,4-butanediol obtained by a bio-manufacturing process, and 146 g (1.4 mol) of 1,5-pentanediol and 438 g (5.0 mol) of ethylene carbonate, commonly used in petroleum-based raw materials.

Thereto was added 0.09 g of titanium tetrabutoxide as a catalyst, and a reaction was performed for 18 hours at a

reaction temperature of 140 to 160°C while the pressure was dropped from 5 kPa to 3 kPa and a mixture of ethylene glycol generated and the ethylene carbonate was distilled off. Thereafter, switching to simple distillation was performed, and the reaction was performed at 185°C for 3 hours under a gradual pressure reduction to 0.1 kPa to distill out a monomer, thereby obtaining polycarbonate diol PC8. PC8 had a hydroxyl value of 54.7 and an average molecular weight (Mn) of 2050, and polymerization had no problem.

[Polymerization Example 9 of polycarbonate diol]

A 1-L glass flask equipped with a rectifier filled with a regular packing material and a stirring apparatus was loaded with 128 g (1.4 mol) of petroleum-based 1,4-butanediol, and 306 g (3.0 mol) of 1,6-hexanediol and 417 g (4.7 mol) of ethylene carbonate, commonly used in petroleum-based raw materials.

Thereto was added 0.09 g of titanium tetrabutoxide as a catalyst, and a reaction was performed for 18 hours at a reaction temperature of 140 to 160°C while the pressure was dropped from 5 kPa to 3 kPa and a mixture of ethylene glycol generated and the ethylene carbonate was distilled off. Thereafter, switching to simple distillation was performed, and the reaction was performed at 185°C for 3 hours under a gradual pressure reduction to 0.1 kPa to distill out a monomer, thereby obtaining polycarbonate diol PC9. PC9 had a hydroxyl value of 56.0 and an average molecular weight (Mn) of 2004, and polymerization had no problem.

[Polymerization Example 10 of polycarbonate diol]

A 1-L glass flask equipped with a rectifier filled with a regular packing material and a stirring apparatus was loaded with 430 g (4.8 mol) of petroleum-based 1,4-butanediol, and 27 g (0.23 mol) of 1,6-hexanediol and 443 g (5.0 mol) of ethylene carbonate, commonly used in petroleum-based raw materials.

Thereto was added 0.09 g of titanium tetrabutoxide as a catalyst, and a reaction was performed for 18 hours at a reaction temperature of 140 to 160°C while the pressure was dropped from 5 kPa to 3 kPa and a mixture of ethylene glycol generated and the ethylene carbonate was distilled off. Thereafter, switching to simple distillation was performed, and the reaction was performed at 185°C for 3 hours under a gradual pressure reduction to 0.1 kPa to distill out a monomer, thereby obtaining polycarbonate diol PC10. PC10 had a hydroxyl value of 54.5 and an average molecular weight (Mn) of 2060, and polymerization had no problem.

[Table 1]

Table 1: Evaluation of physical properties of polycarbonate diol

| | Compositional ratio (mol%) of polycarbonate diol | | | | Hydroxyl value (mgKOH/g) | Number average molecular weight (Mn) | Integral value ratio | APHA | State | Low-temperature storage stability | Polycarbonate diol |
|---|---|---|---|---|---|---|---|---|---|---|---|
| | 1,4-BDO (plant-derived) | 1,4 -BDO (petroleum-derived) | 1,6-HDO | 1,5-PDO | | | | | | | |
| Polymerization Example 1 | 31.0 | | 69.0 | | 55.5 | 2022 | 0.10 | ○ | Liquid | △ | PC1 |
| Polymerization Example 2 | 49.0 | | 51.0 | | 55.8 | 2010 | 0.13 | ○ | Liquid | ○ | PC2 |
| Polymerization Example 3 | 70.0 | | 30.0 | | 56.0 | 2005 | 0.17 | ○ | Semisolid | △ | PC3 |
| Polymerization Example 4 | 48.0 | | 52.0 | | 110.5 | 1015 | 0.14 | ○ | Liquid | ○ | PC4 |
| Polymerization Example 5 | 50.0 | | 50.0 | | 37.4 | 3000 | 0.16 | ○ | Liquid | ○ | PC5 |
| Polymerization Example 6 | 30.0 | | | 70.0 | 55.0 | 2040 | 0.11 | ○ | Liquid | △ | PC6 |
| Polymerization Example 7 | 50.0 | | | 50.0 | 55.8 | 2011 | 0.14 | ○ | Liquid | ○ | PC7 |
| Polymerization Example 8 | 70.5 | | | 29.5 | 54.7 | 2050 | 0.19 | ○ | Liquid | △ | PC8 |
| Polymerization Example 9 | | 69.0 | 31.0 | | 56.0 | 2004 | 0 | ○ | Semisolid | △ | PC9 |
| Polymerization Example 10 | 95.0 | | 5.0 | | 54.5 | 2060 | 1.10 | △ | Solid | × | PC10 |

1,4-BDO: 1,4-Butanediol
1,6-HDO: 1,6-Hexanediol
1,5-PDO: 1,5-Pentanediol

<Evaluation of polyurethane film>

[Example 1]

A 500-mL separable flask sealed with a nitrogen gas and equipped with a stirrer was loaded with 10.5 g (0.04 mol) of 4,4'-methylenebiscyclohexyl diisocyanate (hydrogenated MDI, average number of isocyanate groups in one molecule: 2.0) and 213 g of N,N-dimethylformamide (DMF), and these were warmed to 40°C to obtain a solution. While the solution was stirred, 140 g of N,N-dimethylformamide (DMF), 0.0025 g of dibutyltin dilaurate as a catalyst, and 40 g (0.02 mol) of polycarbonate polyol PC1 were dripped into the flask over 30 minutes. A reaction was performed with stirring at 50°C for 2 hours, to obtain an isocyanate-terminated prepolymer. After the temperature of the solution in the flask was dropped to room temperature, 3.4 g (0.02 mol) of isophoronediamine as a chain extender was added, a reaction was performed at room temperature for 1 hour and thereafter 0.5 g of ethanol as a reaction terminator was added to obtain a DMF solution (solid content: about 20% by mass) of polyurethane. The resulting N,N-dimethylformamide (DMF) solution having a solid content of 20% by mass was applied onto a glass plate, and heated at 80°C for 2 hours, to produce a polyurethane film having a thickness of 50 μm. The polyurethane film was left to stand at room temperature for 24 hours, and thereafter subjected to evaluation of various physical properties. The evaluation results were shown in Table 2.

Regarding physical properties of the polyurethane film, as the elongation at breakage is larger, the flexibility is more excellent. It is indicated that, as the swelling ratio is lower, degradation of the film is not observed and the oleic acid resistance is more favorable.

[Examples 2 to 8]

Polyurethane films were respectively obtained in the same manner as in Example 1 except that PC2 to PC8 were used as polycarbonate diols, and the films were subjected to evaluation of various physical properties. The evaluation results were shown in Table 2.

[Comparative Examples 1 and 2]

Polyurethane films were respectively obtained in the same manner as in Example 1 except that PC9 and PC10 were used as polycarbonate diols, and the films were subjected to evaluation of various physical properties. The evaluation results were shown in Table 2.

[Table 2]

| Table 2: Evaluation of polyurethane film | | | | | | | | | | |
|---|---|---|---|---|---|---|---|---|---|---|
| | Example 1 | Example 2 | Example 3 | Example 4 | Example 5 | Example 6 | Example 7 | Example 8 | Comparative Example 1 | Comparative Example 2 |
| Polycarbonate diol | PC1 | PC2 | PC3 | PC4 | PC5 | PC6 | PC7 | PC8 | PC9 | PC10 |
| <Tensile properties at room temperature> Strength at breakage (MPa) | 42<br>○ | 45<br>○ | 51<br>◎ | 55<br>◎ | 38<br>△ | 33<br>△ | 36<br>△ | 40<br>○ | 49<br>○ | 57<br>◎ |
| Elongation at breakage (%) | 570<br>○ | 530<br>○ | 480<br>△ | 440<br>△ | 610<br>◎ | 540<br>○ | 505<br>○ | 455<br>△ | 485<br>△ | 380<br>× |
| Moist heat resistance Breaking strength retention ratio (%) | 91<br>○ | 97<br>○ | 93<br>○ | 92<br>○ | 90<br>○ | 92<br>○ | 98<br>○ | 93<br>○ | 92<br>○ | 85<br>△ |
| Oleic acid resistance Swelling ratio (%) | 9<br>◎ | 12<br>○ | 14<br>○ | 10<br>○ | 16<br>○ | 8<br>◎ | 13<br>○ | 15<br>○ | 12<br>○ | 21<br>△ |

<Evaluation of coating film>

[Example 9]

A coating material main agent was obtained by mixing and stirring 200 g (0.1 mol) of polycarbonate diol PC1, 2.06 g of a leveling agent BYK-331 (manufactured by BYK-Chemie GmbH), 0.8 g of dibutyltin dilaurate (manufactured by Air Products and Chemicals, Inc.), and 356 g of butyl acetate as thinner. Thereto was added 38.2 g of Duranate TPA-100 (manufactured by Asahi Kasei Chemicals Corporation: hexamethylene diisocyanate-based isocyanurate-type curing agent, NCO content = 23.1% by mass, isocyanate group in one molecule: 3.0) as a curing agent, and these were mixed to obtain a coating material solution (coating material composition). This coating material solution was applied onto a glass plate by use of an applicator, and thereafter heated and cured at 80°C for 2 hours to obtain a coating film. Table 3 showed various physical properties of the coating film obtained from the coating material solution (coating material composition) in which PC1 was used.

[Examples 10 to 16]

Coating material solutions (coating material compositions) were respectively produced in the same manner as in Example 9 except that PC2 to PC8 were used as polycarbonate diols, and physical properties of coating films obtained from the respective coating material solutions were evaluated. The evaluation results were shown in Table 3.

[Comparative Example 3 and 4]

Coating material solutions (coating material compositions) were respectively produced in the same manner as in Example 9 except that PC9 and PC10 were used as polycarbonate diols, and physical properties of coating films obtained from the respective coating material solutions were evaluated. The evaluation results were shown in Table 3.

[Table 3]

| Table 3: Evaluation of coating film | | | | | | | | | | | |
|---|---|---|---|---|---|---|---|---|---|---|---|
| | | Example 9 | Example 10 | Example 11 | Example 12 | Example 13 | Example 14 | Example 15 | Example 16 | Comparative Example 3 | Comparative Example 4 |
| Polycarbonate diol | | PC1 | PC2 | PC3 | PC4 | PC5 | PC6 | PC7 | PC8 | PC9 | PC10 |
| Chemical resistance | Ethanol | ○ | ○ | ○ | ○ | ○ | ○ | ○ | ○ | ○ | ○ |
| | MEK | ○ | ○ | ○ | ○ | ○ | ○ | ○ | ○ | ○ | △ |
| | Xylene | ○ | ○ | △ | ○ | △ | ○ | ○ | △ | ○ | △ |
| Weather resistance | ΔE | ○ | ○ | ○ | ○ | ○ | ○ | ○ | ○ | ○ | × |
| Soft feeling | | ○ | ○ | △ | ○ | ○ | ○ | ○ | △ | △ | × |

**Claims**

1. A polycarbonate diol having a repeating unit represented by the following formula (1) and a terminal hydroxyl group, wherein
an integral value of a signal at 2.50 to 2.70 ppm is 0.01 to 1.0 under the assumption that an integral value of a signal at 3.90 to 4.45 ppm is 1000 in a $^1$H-NMR spectrum measured with chloroform-d as a solvent and tetramethylsilane as a standard substance:

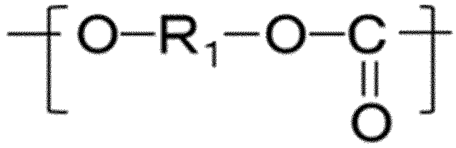 (1)

wherein $R_1$ represents a divalent aliphatic hydrocarbon having 2 to 20 carbon atoms.

2. The polycarbonate diol according to claim 1, wherein the repeating unit represented by the formula (1) contains a repeating unit represented by the following formula (2).

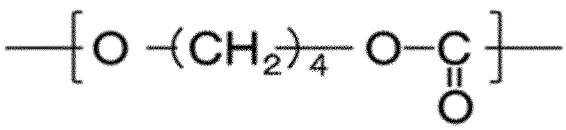 (2)

3. The polycarbonate diol according to claim 2, wherein the repeating unit represented by the formula (1) contains a repeating unit represented by the following formula (3).

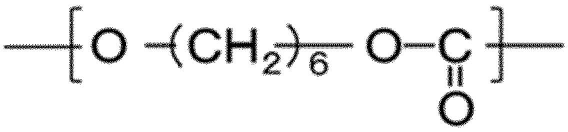 (3)

4. The polycarbonate diol according to claim 2, wherein the repeating unit represented by the formula (1) contains a repeating unit represented by the following formula (4).

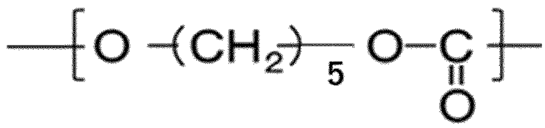 (4)

5. The polycarbonate diol according to claim 1, wherein a hydroxyl value measured by a neutralization titration method of JIS K 0070 (1992) is 32 to 280 mg-KOH/g.

6. The polycarbonate diol according to claim 1, wherein the repeating unit represented by the formula (1) contains

   10 to 95% by mol of a repeating unit represented by the following formula (2), and
   5 to 90% by mol of repeating unit(s) represented by the following formula (3) and/or the following formula (4).

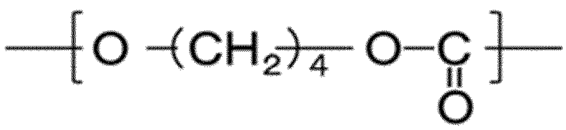 (2)

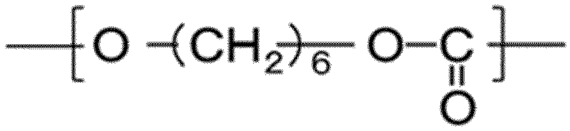 (3)

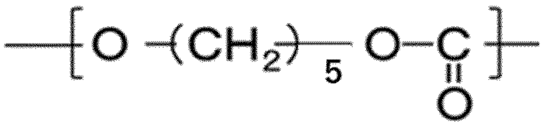 (4)

7. A polyurethane resin that is a reaction product of

the polycarbonate diol according to any one of claims 1 to 6,
an organic polyisocyanate, and
a chain extender.

8. A coating composition comprising a reaction product of

the polycarbonate diol according to any one of claims 1 to 6, and
an organic polyisocyanate.

Europäisches Patentamt
European Patent Office
Office européen des brevets

# EUROPEAN SEARCH REPORT

Application Number
EP 25 17 1630

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 587 468 A1 (ASAHI CHEMICAL IND [JP]) 1 January 2020 (2020-01-01)<br>* claims 1-13 *<br>* paragraph [0001] *<br>* paragraph [0078] - paragraph [0109] *<br>* examples 1-16 *<br>* table 1 *<br>* paragraph [0095] - paragraph [0109] *<br>* application examples 1-31 *<br>* tables 2, 3 *<br>----- | 1-8 | INV.<br>C08G18/08<br>C08G18/10<br>C08G18/24<br>C08G18/32<br>C08G18/44<br>C08G18/73<br>C08G18/75<br>C08G18/79<br>C08G64/02<br>C08G64/30<br>C08J5/18<br>C09D175/06 |
| X | JP 2020 002352 A (ASAHI KASEI CORP) 9 January 2020 (2020-01-09)<br>* claims 1-13 *<br>* paragraph [0001] *<br>* paragraph [0082] - paragraph [0098] *<br>* examples 1-16 *<br>* paragraph [0100] - paragraph [0115] *<br>* application examples 1-37 *<br>* tables 1-3 *<br>----- | 1-8 | |
| | | | TECHNICAL FIELDS SEARCHED (IPC) |
| X | EP 3 524 630 A1 (ASAHI CHEMICAL IND [JP]) 14 August 2019 (2019-08-14)<br>* claims 1-3 *<br>* paragraph [0001] *<br>* paragraph [0120] - paragraph [0134] *<br>* synthesis examples 1-14 *<br>* table 1 *<br>* paragraph [0135] - paragraph [0146] *<br>* examples 1-16 *<br>* table 2 *<br>-----<br>-/-- | 1-8 | C08J<br>C09J<br>C08G<br>C09D |

The present search report has been drawn up for all claims

2

| Place of search | Date of completion of the search | Examiner |
|---|---|---|
| Munich | 11 August 2025 | Paulus, Florian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 25 17 1630

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 828 215 A1 (ASAHI CHEMICAL IND [JP])<br>2 June 2021 (2021-06-02)<br>* claims 1-6 *<br>* paragraph [0001] *<br>* paragraph [0078] - paragraph [0104] *<br>* polymerisation examples 1-16 *<br>* table 1 *<br>* paragraph [0105] - paragraph [0111] *<br>* examples 1-16 *<br>* tables 2, 3 *<br>----- | 1-8 | |

TECHNICAL FIELDS SEARCHED (IPC)

The present search report has been drawn up for all claims

2

| Place of search | Date of completion of the search | Examiner |
|---|---|---|
| Munich | 11 August 2025 | Paulus, Florian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..........................................................................
& : member of the same patent family, corresponding document

EPO FORM 1503 03.82 (P04C01)

page 2 of 2

## ANNEX TO THE EUROPEAN SEARCH REPORT ON EUROPEAN PATENT APPLICATION NO. EP 25 17 1630

This annex lists the patent family members relating to the patent documents cited in the above-mentioned European search report. The members are as contained in the European Patent Office EDP file on The European Patent Office is in no way liable for these particulars which are merely given for the purpose of information.

11-08-2025

| Patent document cited in search report | Publication date | Patent family member(s) | Publication date |
|---|---|---|---|
| EP 3587468 A1 | 01-01-2020 | NONE | |
| JP 2020002352 A | 09-01-2020 | ES 2868148 T3 | 21-10-2021 |
| | | JP 7395268 B2 | 11-12-2023 |
| | | JP 2020002352 A | 09-01-2020 |
| EP 3524630 A1 | 14-08-2019 | CN 110128924 A | 16-08-2019 |
| | | EP 3524630 A1 | 14-08-2019 |
| EP 3828215 A1 | 02-06-2021 | CN 112940213 A | 11-06-2021 |
| | | EP 3828215 A1 | 02-06-2021 |
| | | JP 7556764 B2 | 26-09-2024 |
| | | JP 2021088705 A | 10-06-2021 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2017014427 A
- JP 2014001475 A
- JP 5826814 B